# EUROPEAN PATENT APPLICATION

(11) **EP 4 645 906 A1**
(43) Date of publication of application: **05.11.2025**
(21) Application number: 24173379.9
(22) Date of filing: 30.04.2024
(51) Int. Cl.: H04R 27/00, H04R 29/00, H04R 1/10, G10L 25/60, B64D 11/00, G06Q 30/0282

(54) **METHOD FOR INFORMING ABOUT SPEECH INTELLIGIBILITY QUALITIES, HEADSET DEVICE, HAND MICROPHONE DEVICE, HANDSET FOR AIRPLANES, SYSTEM FOR COMMUNICATION ROUTINES IN AND AROUND AIRPLANES, AIRPLANE**

(71) Applicant: AIRBUS Operations GmbH, 21129 Hamburg (DE)
(72) Inventor: Dehnke, Christian, 21129 Hamburg (DE)

(57) **Abstract**

The present invention relates to a method (M) for informing about speech intelligibility qualities comprising: receiving (M1) of speech information data exchanged between a first technical device and a second technical device that is currently used by a user; analyzing (M2) a speech intelligibility of the speech information data using a control unit (2) with a control program (3); providing (M3) at least one alarm routine for the user depending on the analysis result of the speech intelligibility of the speech information data. Furthermore a headset device (8), a hand microphone device (6), a handset for airplanes (1), a system (13) for communication routines in and around airplanes and an airplane (100) are presented.

## Description

### TECHNICAL FIELD OF THE INVENTION

The present invention pertains to a method for informing about speech intelligibility qualities, a headset device, a hand microphone device, a handset for airplanes, a system for communication routines in and around airplanes and an airplane.

### TECHNICAL BACKGROUND

When it comes to the operational operation of airplane, there is not only direct person-to-person communication between a wide variety of specialists, but also often communication using appropriate technical devices.

For example, communication takes place between the cabin crew on the airplane and the supply staff outside the airplane during preparation for the next flight. For this purpose, communication can take place via the usual technical devices, such as headset devices or the like. In addition, communication also takes place between the cabin crew and the passengers, with the main focus here addressing the passengers, for example in the course of safety information before an upcoming flight.

This form of predominantly one-way communication is also known as "passenger address" (PA): In this case, the cabin or flight crew would like to make an announcement to the passengers. The cabin/flight crew uses the loudspeakers available on the aircraft for this purpose. Technical devices such as a handset, headset and a hand mike can also be used depending on the design of the PA.

In this context, it may be stipulated that certain evidence of communication that has taken place must be provided and documented based on regulations. The focus here is particularly on the announcements and information announced to the passengers by the cabin crew. Reduced speech intelligibility cannot always be immediately assessed in terms of speech intelligibility by a person who is currently speaking the announcement into a technical device, since an output device in the form of a loudspeaker is provided at another location on the aircraft.

Although the proposed technology can be classified as particularly good in quality, difficulties may arise with speech intelligibility in some cases. This can be due, for example, to the fact that a person does not speak directly into a microphone or generally speaks unclearly at times. Poor speech intelligibility can therefore lead to difficult or even incomplete communication. This can also result in longer communication, as the other person has to ask more often about the content of the communication.

Both people are often not even aware that they themselves may be the reason for poor speech intelligibility during communication, so no effort is made to improve the situation. Even if the cabin crew announces announcements to the passengers using the PA, it is hardly possible for a cabin crew specialist to understand their own speech intelligibility during the announcement. The technology used is flawless, i.e. without any significant technical limitations, but the actual causes of impaired speech intelligibility can, for example, lie in the person themselves.

### SUMMARY OF THE INVENTION

Against this background, it is an object of the present invention to provide a technical solution which can be used to inform about speech intelligibility qualities during communication.

This object is achieved by a method having the features of claim 1, a headset device having the features of claim 11, a hand microphone device having the features of claim 12, a handset for airplanes having the features of claim 13, a system for communication routines in and around airplanes having the features of claim 14 and an airplane having the features of claim 15.

According to the invention, a method for informing about speech intelligibility qualities comprises the following steps: receiving of speech information data exchanged between a first technical device and a second technical device that is currently used by a user; analyzing a speech intelligibility of the speech information data using a control unit with a control program; providing at least one alarm routine for the user depending on the analysis result of the speech intelligibility of the speech information data.

Depending on the analysis result, a user can be provided with a corresponding alarm routine, so that the user can take measures to improve speech intelligibility if this appears necessary. In the event that a user cannot assess whether the speech intelligibility between the two technical devices can be classified as sufficiently good, the method presented helps and the alarm routine provided can have a guiding effect on the user.

Analyzing a speech intelligibility of the speech information data can be performed using a standard speech intelligibility algorithm or the like.

Speech information data can be for example spoken words exchanged between humans. The first and second technical devices can be any devices that are designed to receive or transmit voice information data. The first and second technical devices can be connected to one another, for example, using physical connecting lines. Any form of radio connection between these devices is also conceivable.

A further advantage is that the method is suitable for providing the at least one alarm routine while communication is taking place, so that improvements can be made, if necessary, derived from the alarm routine provided. In a simpler case, this can be seen, for example, in an improved pronunciation of the user, who is shown his own incomprehensibility.

Further according to the invention, a headset device is presented which is designed to carry out the inventive method when speech information data is sent or received.

For the purposes of the present invention, this headset device can be viewed as a second technical device if it carries out the method according to the invention. In this respect, the same advantages as described above also apply to the headset device presented.

The advantages of a headset device include the fact that a user has both hands free while communication is carried out using the headset device. While the presented method is carried out by the headset device, this advantage remains, so that a user can be informed about poor speech intelligibility without interrupting the activity they are currently carrying out with their hands.

Further according to the invention, a hand microphone device is presented which is designed to carry out the inventive method when speech information data is sent or received.

For the purposes of the present invention, this hand microphone device can also be viewed as a second technical device if it carries out the method according to the invention. In this respect, the same advantages as described above also apply to the headset device presented.

A user who is currently using such a hand microphone device can advantageously devote themselves entirely to operating this device without having to pay attention to speech intelligibility. Due to the hand microphone device according to the invention, the user is automatically informed of problems with speech intelligibility. In this respect, time and effort are only spent on improving speech intelligibility when there is really a need.

Further according to the invention, a handset for airplanes is presented which is designed to carry out the inventive method when speech information data is sent or received.

For the purposes of the present invention, this handset for airplanes can also be viewed as a second technical device if it carries out the method according to the invention. In this respect, the same advantages as described above also apply to the headset device presented.

The operation of standard functions of such a handset for airplanes can sometimes absorb a user's attention so much that he cannot pay attention to the quality of speech intelligibility. Due to the handset for airplanes according to the invention, the user is automatically informed of problems with speech intelligibility.

Especially when the user announces voice announcements for the passengers, his attention must be completely focused on this task. An automatic notification about problems with the speech intelligibility of his voice announcements advantageously gives him the opportunity to make appropriate improvements in a timely manner and at the same time the user does not need to pay attention directly, but can devote himself fully to his actual task.

In this respect, time and effort are only spent on improving speech intelligibility when there is really a need.

Further according to the invention, a system for communication routines in and around airplanes is presented which comprises at least one technical unit designed to carry out the inventive method when speech information data is sent or received.

For the purposes of the present invention, the at least one technical device of the presented system can also be viewed as a second technical device if the system carries out the method according to the invention. In this respect, the same advantages as described above also apply to the system presented.

Further according to the invention, an airplane is presented which comprises a system according to the invention.

The advantages mentioned above apply in the same way to this object according to the invention, insofar as they can be transferred to the airplane presented.

Thus, one idea of the present invention is not only to analyze speech information data in the sense of speech intelligibility, but also, depending on this analysis, to provide at least one alarm routine in order to alert a user to possible inadequacies in current communications, carried out using appropriate technical aids.

In situations that particularly intensively bind a user's attention, such as when making critical queries or carrying out security-relevant protocols or the like, it may happen that a user cannot pay particular attention to the poor quality of speech intelligibility that may be caused by him.

The presented invention makes it possible to provide an automated routine which is suitable for alerting a user to a reduced quality of speech intelligibility. In this sense, an improvement can then be made immediately in real time, so that improved communication can be achieved. Redundancies in the sense of more frequent inquiries relating to poorly communicated communication due to reduced speech intelligibility can thus be avoided, so that the time saved can be advantageously used for more important things.

Advantageous embodiments and improvements of the present invention are found in the subordinate claims.

According to an embodiment of the invention, at least one quality feature of the analysis result in relation to the speech intelligibility of the speech information data triggers at least one characteristic of the alarm routine.

The at least one quality feature of the analysis result can be, for example, at least one parameter which influence the speech intelligibility. In a simple case, for example, such a parameter can relate to volume. It is also conceivable that such a parameter affects the clarity in general or clarity of spoken words or sentence components.

The at least one characteristic of the alarm routine can be, for example, a volume of an alarm routine or generally a strength or an intensity of a characteristic, such as a type of vibration signal of an alarm routine or the like.

In this way, for example, an assignment can be made in an advantageous manner, so that a user can be made even more specifically aware of a special circumstance with regard to the current quality of speech intelligibility of the current communication.

According to another embodiment of the invention, at least two consecutive and analyzed speech information data trigger at least one characteristic of the alarm routine.

The at least two consecutive and analyzed speech information data can be, for example, two words or sounds spoken directly one after the other by the user.

It is also conceivable that it is a spoken word from the user and a spoken word from one of the user's conversation partners who is using the first technical device. In this case, the conversation partner would be just another person. However, it is also conceivable that the conversation partner is any form of voice assistant. Hybrid formats are also conceivable, such as a conversation partner amplifying or generally changing a language using a language assistant program or the like.

The at least one characteristic of the alarm routine can be, for example, a volume of an alarm routine or generally a strength or an intensity of a characteristic.

In this way, for example, an assignment can be made in an advantageous manner, so that a user can be made even more specifically aware of a special circumstance with regard to the current quality of speech intelligibility of the current communication.

According to another embodiment of the invention, the alarm routine is selected from: at least one vibration signal from at least one vibration unit; vibration signals from at least two vibration units, wherein the respective vibration signals of each vibration unit differing from each other in at least one characteristic; sequence of vibration signals from at least one vibration unit; vibration sequences of vibration signals from at least two vibration units, wherein the respective vibration sequences differing from each other in at least one characteristic.

Vibration signals do not disturb the actual communication, so that an easily perceivable alarm routine can be advantageously provided for the user without the spoken communication being significantly disturbed.

Different vibration signals, which differ in their characteristics, can advantageously direct a user's attention even better to a possible poor speech intelligibility of the communication. A characteristic of a vibration signal can, for example, be a vibration acceleration of this signal.

According to an embodiment of the invention, the vibration signal is selected from: vibration signal with a vibration acceleration between 0,5 m/s² and 2,5 m/s², preferably between 0,75 m/s² and 2 m/s², more preferably between 1 m/s² and 1,5 m/s², more preferably between 1,5 m/s² and 1,75 m/s².

Depending on the area of application and use for the method according to the invention, suitable values can be selected so that a user is particularly reliably informed of a difficult situation with regard to speech intelligibility.

In some embodiments of the inventions, the vibration sequence is selected from: continuously increasing in relation to a vibration strength of the vibration signal; continuously increasing in relation to a vibration strength of the vibration signal with pauses with a time interval between 0.1 and 5 seconds, preferably between 0.5 and 3 seconds, more preferably between 1 and 2 seconds, even more preferably of approximately 1 second; constant vibration strength of the vibration signal; constant vibration strength of the vibration signal with pauses with a time interval between 0.1 and 5 seconds, preferably between 0.5 and 3 seconds, more preferably between 1 and 2 seconds, even more preferably of approximately 1 second.

A suitably selected sequence is particularly advantageous if the alarm routine has to be provided to a user over a longer period of time so that it can be reliably perceived by the user. This can advantageously ensure that the triggered and provided alarm routine is noticed by the user, so that improvement measures can then be taken.

According to another embodiment of the invention, the control unit with the control program is an integral part of the second technical device.

This compact design has the advantage that the method used can be used directly without any significant connection obstacles. Where the voice information data arrives or is sent directly, the analysis also takes place directly. In this respect, it can be assumed that such a method can be carried out particularly quickly, i. e. almost in real time. The components used for the method can also be coordinated particularly well with one another, resulting in a particularly reliable method.

In some embodiments of the inventions, the control unit with the control program is at least partially an integral part of the second technical device and partially an integral part of an external system which is coupled to the second technical device or wherein the control unit with the control program is an integral part of an external system which is coupled to the second technical device.

A separation in the sense of these embodiments offers the advantage that a needs-based division of data or algorithms can be carried out in a targeted manner, for example to increase the ease of maintenance of the method.

A complete outsourcing to an external system offers the advantage that an independent control authority can carry out the sensitive analysis steps of the method presented without a user being able to have any significant influence on it. A particularly safe method can thus be achieved.

According to another embodiment of the invention, the at least one alarm routine for the user is provided by a third technical device coupled to the second technical device and the third technical device is selected from: electrical device designed to cause vibration signals; electrical device with at least one motor device designed to cause vibration signals.

This means that the method presented and the components required to carry out this method can be retrofitted into existing devices at any time. For example, the third technical device can be placed into a second device so that additional functions can be added to it. In general, increased flexibility is therefore possible with regard to the use of the method.

An electrical device can be, for example, a taptic engine device or the like. Such a taptic engine device can comprise, for example an electromagnetic linear actuator, spring-mounted metal pins and electromagnets. Other technical concepts in the sense of the logic of a taptic engine are conceivable. The at least one motor device can be an electrical motor device with at least one unbalance element, so that vibration signals can be provided particularly reliably.

According to another embodiment of the invention, the vibration unit is an integral part of the second technical device and selected from: electrical device designed to cause vibration signals; electrical device with at least one motor device designed to cause vibration signals.

With regard to the electrical device or the electrical motor device, the same statements apply as already explained above.

The provision of alarm routines in the form of vibration signals and the like can therefore be perceived by a user directly and immediately where he carries out the communication in question. There is therefore a high probability that a user can reliably respond to a particular situation in terms of speech intelligibility.

### BRIEF SUMMARY OF THE DRAWINGS

The present invention is explained in more detail below with reference to the embodiments shown in the schematic figures:
- Fig. 1: schematically depicts a flow diagram of a method for informing about speech intelligibility qualities;
- Fig. 2: shows a schematic view of a handset for airplanes;
- Fig. 3: shows a schematic view of a hand microphone device;
- Fig. 4: shows a schematic view of a headset device;
- Fig. 5: shows a schematic view of a system for communication routines in and around airplanes;
- Fig. 6: shows a possible functional sketch of one of the devices according to Figures 2 to 4;
- Fig. 7: shows a coordinate system of a speech intelligibility and a vibration signal in relation to the method presented;
- Fig. 8: shows an airplane equipped with the system of Fig.5.

In the figures of the drawing, elements, features and components which are identical, functionally identical and of identical action are denoted in each case by the same reference designations unless stated otherwise.

### DESCRIPTION OF EXEMPLARY EMBODIMENTS

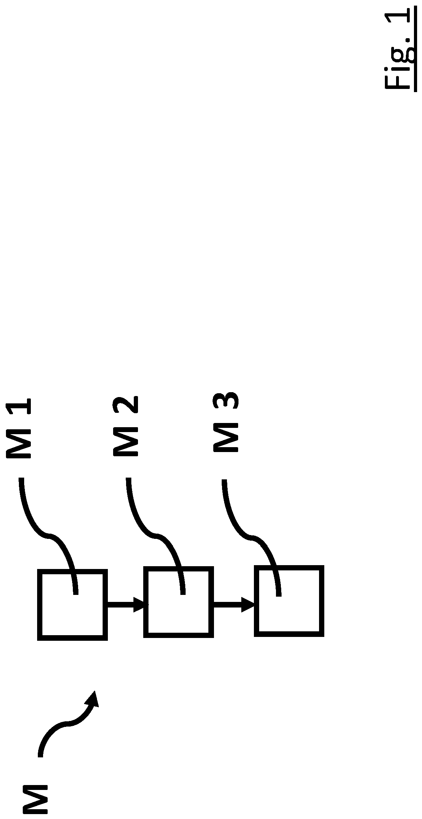

Fig. 1 shows a flow diagram of a method (M) for informing about speech intelligibility qualities. This method (M) comprises the following steps: receiving (M1) of speech information data exchanged between a first technical device and a second technical device that is currently used by a user; analyzing (M2) a speech intelligibility of the speech information data using a control unit with a control program; providing (M3) at least one alarm routine for the user depending on the analysis result of the speech intelligibility of the speech information data.

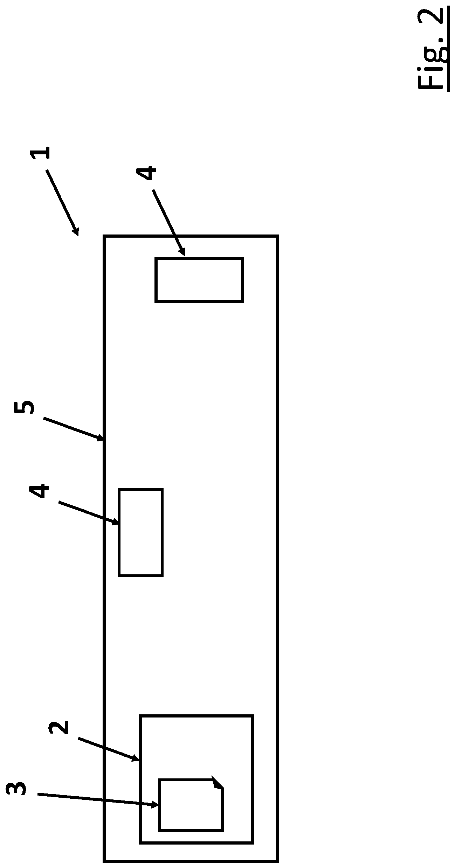

Fig. 2 shows a schematic view of a handset for airplanes 1. This handset for airplanes 1, which can be seen as a second technical device in the sense of the present invention, can have the usual components of such a device, e.g. a keyboard unit, a loudspeaker unit, a microphone unit (not shown in detail in Fig. 2).

The handset for airplanes 1 has a generally elongated shape so that it can be comfortably held in the hand. Any other forms are conceivable. In relation to the image plane, a control unit 2 with control program 3 is shown on the left. This control unit 2 with control program 3 is designed to analyze a speech intelligibility of speech information data which are received or send by the handset for airplanes 1.

In embodiments not shown, it is conceivable that the control unit 2 with the control program 3 is at least partially an integral part of the handset for airplanes 1 and partially an integral part of an external system (not shown in Fig. 2) which is coupled to the second technical device.

If a user uses the handset for airplanes 1 to communicate in the form of spoken words or generally sounds, the speech intelligibility of the speech information data of this communication can by analyzed. In that sense the handset for airplanes 1 is designed to carry out the inventive method (M) when speech information data is sent or received.

Depending on the analysis result of the speech intelligibility of the speech information data, the handset for airplanes 1 shown in Fig. 2 is further designed to provide at least one alarm routine for the user. The handset for airplanes 1 has two vibration units 4, which are shown on the right and top in relation to the image plane. The vibration units 4 are respectively designed to provide at least one vibration signal and/or a sequence of vibration signals.

It is conceivable that a user feels the emitted vibration signals without any further technical features, while the handset for airplanes 1 is held in the hand or worn on the body.

It is also conceivable that, for example, the respective vibration units 4 are coupled or generally connected to a housing 5 of the handset for airplanes 1. The user holding the handset for airplanes 1 can therefore perceive the vibration signals even better and react accordingly. In the event that spoken words are pronounced by the user indistinctly or generally with reduced speech intelligibility, the analysis carried out can lead to at least one alarm routine being issued in the form of these vibration signals.

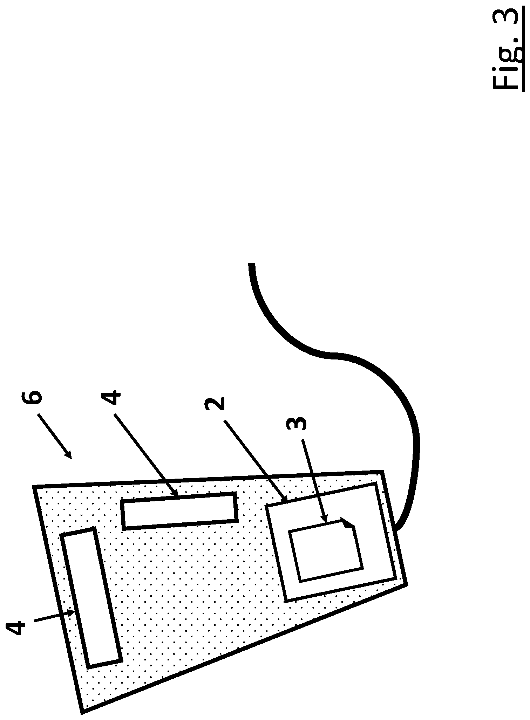

Fig. 3 shows a schematic view of a hand microphone device 6. This is a hand microphone device 6, such as that used in an airplane, especially in the cockpit area.

This hand microphone device 6, which can be seen as a second technical device in the sense of the present invention, can have the usual components of a radio microphone device, e. g. a transmitter unit and optionally also a receiver unit as well as the typical components of a microphone (not shown in Detail in Fig. 3).

In relation to the image plane, a control unit 2 with control program 3 is shown on the bottom of the hand microphone device 6. This control unit 2 with control program 3 is designed to analyze a speech intelligibility of speech information data which are received or send by the hand microphone device 6.

In addition, the hand microphone device 6 shown has two vibration units 4. One vibration unit 4 is shown arranged at the top with respect to the image plane and the other vibration unit 4 is shown arranged to the side. Other positionings are conceivable. More than two vibration units 4 can also be provided. For example, it is conceivable that a vibration unit 4 is arranged centrally in the hand microphone device 6.

If a user uses the hand microphone device 6 to communicate in the form of spoken words or generally sounds, the speech intelligibility of the speech information data of this communication can by analyzed. In that sense the hand microphone device 6 is designed to carry out the inventive method (M) when speech information data is sent or received.

It is conceivable that a user feels the emitted vibration signals of the vibration units 4 without any further technical features, while the hand microphone device 6 is held in the hand or worn on the body.

It is also conceivable that, for example, the respective vibration units 4 are coupled or generally connected to a casing 7 of the hand microphone device 6. The user holding the handset for airplanes 1 can therefore perceive the vibration signals even better and react accordingly. In the event that spoken words are pronounced by the user indistinctly or generally with reduced speech intelligibility, the analysis carried out can lead to at least one alarm routine being issued in the form of these vibration signals.

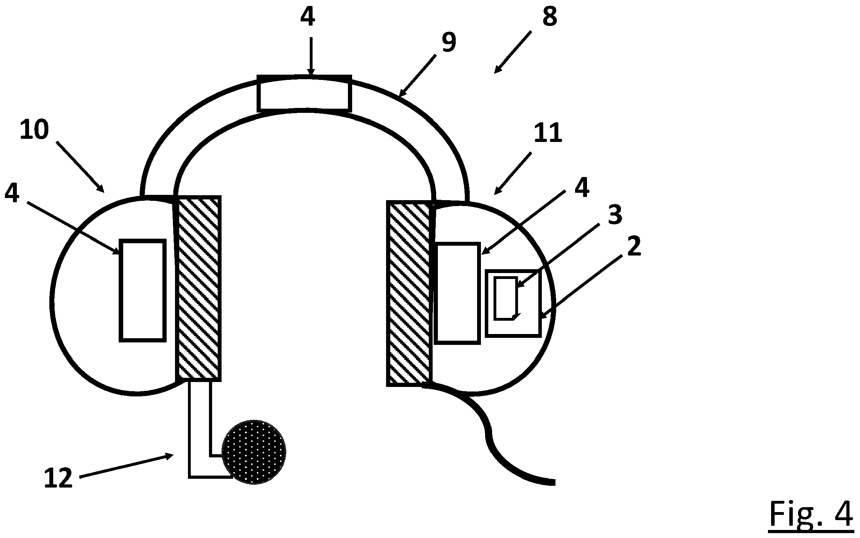

Fig. 4 shows a schematic view of a headset device 8. This headset device 8 includes a bracket 9 and two earpad devices 10, 11 arranged on the left and right (relative to the image plane) on this bracket 9. The shown headset device 8 is therefore represented in a typical form of a circumaural headphone (also known as full size headphone or over-ear headphone). A microphone arrangement 12, into which a user can speak, is also shown, mounted on the left earpiece device 10 of the headset device 8.

The version of this headset device 8 is only shown as an example. Any other shapes and configurations with regard to the arrangement of the earpad devices 10, 11 and microphone arrangement 12 are conceivable. Instead of the earpad devices 10, 11, for example, in-ear devices or the like can also be provided.

In that respect, this hand headset device 8, which can be seen as a second technical device in the sense of the present invention, can have the usual components of a headset device 8, e. g. headphone device and microphone device etc..

In relation to the image plane, a control unit 2 with control program 3 is provided in the right earpad device 11. This control unit 2 with control program 3 is designed to analyze a speech intelligibility of speech information data which are received or send by the headset device 8.

Other positionings of this control unit 2 with control program 3 are conceivable. For example, the control unit 2 with control program 3 could also be in the left earpad device 10 or arranged in the bracket 9.

Furthermore, the headset device 8 shown has three vibration units 4. One vibration unit 4 is shown arranged in the bracket 9 and the others are respectively arranged in the earpad devices 10, 11. Other positionings are conceivable. More than three vibration units 4 can also be provided.

If a user uses the headset device 8 to communicate in the form of spoken words or generally sounds, the speech intelligibility of the speech information data of this communication can by analyzed. In that sense the headset device 8 is designed to carry out the inventive method (M) when speech information data is sent or received.

It is conceivable that a user feels the emitted vibration signals of the vibration units 4 without any further technical features, while the headset device 8 is worn on the head of a user.

It is also conceivable that, for example, the respective vibration units 4 are coupled or generally directly connected to the bracket 9 or coupled or generally directly connected to one of the earpad devices 10, 11.

The user wearing the headset device 8 can therefore perceive the vibration signals even better and react accordingly. In the event that spoken words are pronounced by the user indistinctly or generally with reduced speech intelligibility, the analysis carried out can lead to at least one alarm routine being issued in the form of these vibration signals.

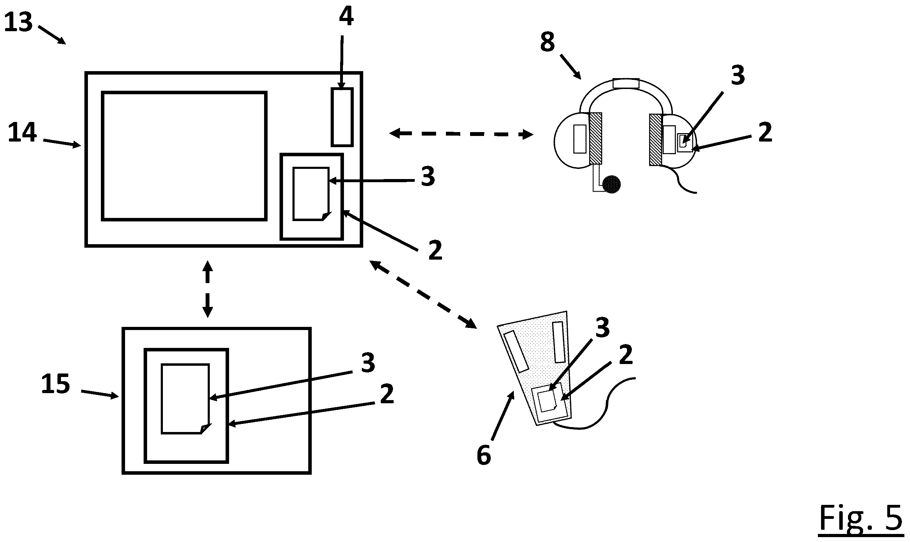

Fig. 5 shows a schematic view of a system 13 for communication routines in and around airplanes. The system 13 is equipped with a base unit 14, a headset device 8 according to FIG. 4, a microphone device 6 according to FIG. 3 and an external system unit 15.

In embodiments not shown in detail, any number of the respective components (base unit 14, headset device 8, microphone device 6, external system unit 15) can be present.

The system 13 presented can be part of a CIDS (Cabin Information Data System) or an FCMS (Future Cabin Information System) or an RAIMS (Radio Audio Integrated Management System). In further embodiments, the headset device 8 or the microphone device 6 can also be part of a CIDS (Cabin Information Data System) or of a FCMS (Future Cabin Information System) or of a RAIMS (Radio Audio Integrated Management System).

The respective components (base unit 14, headset device 8, microphone device 6, external system unit 15) are each shown with a control unit 2 with control program 3.

In further exemplary embodiments not shown in detail, it is conceivable that only one component is equipped with a control unit 2 with control program 3, the other components then being correspondingly coupled or generally connected to this component, so that a respective analysis of speech intelligibility is centrally provided for all components. For example, only the external system unit 15 can be intended for performing the analysis and providing than the results to the other components of the system 13. It is also conceivable that each component carries out a respective analysis proportionally or even just for itself.

The external system unit 15 can, for example, be provided at a respective airport in the form of a separate server unit or computer unit. The base unit 14 can be provided inside an airplane, in particular inside a cabin of an airplane. It is conceivable that this base unit 14 is designed to carry out direct communication via it. In other words, the staff uses this base unit 14 in approximately the same way as a video-phone or the like. In this respect, this base unit 14 is also equipped with a vibration unit 4.

If a user uses the base unit 14 (or any other appropriate component of the system 13 for this purpose) to communicate in the form of spoken words or generally sounds, the speech intelligibility of the speech information data of this communication can by analyzed. In that sense the system 13 is designed to carry out the inventive method (M) when speech information data is sent or received.

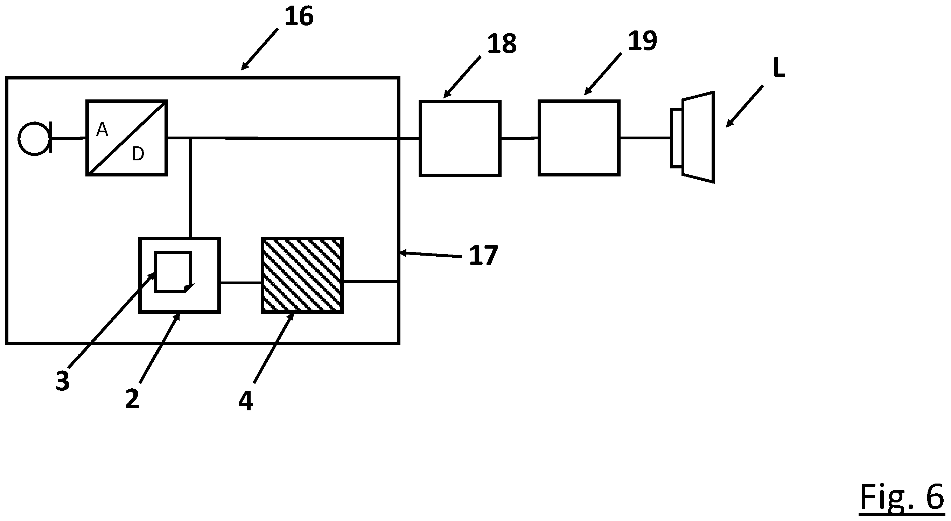

Fig. 6 shows a possible functional sketch of one of the devices according to Figures 2 to 4. An analog or digital voice signal is sent via the representative device 16 to the control unit 2 with a control program 3 within the representative device 16. The representative device 16 can be for example one of the devices according to Figures 2 to 4. Alternatively it can be also an appropriate communication device such as any handset or any hand mike etc.. In an embodiment not shown in detail, it is conceivable that such a device is also provided in the form of a mobile device or the like. It is also conceivable that the invention according to the invention is provided in the form of the method on such a mobile device or the like, at least partially in the form of an application or the like.

The control unit 2 with the control program 3 is connected to a vibration unit 4 which in turn is mechanically coupled to an inner wall of a housing unit 17 of the representative device 16. Depending on the analysis result of the speech intelligibility of the speech information data, which is provided by the control unit 2 with the control program 3, the vibration unit provides an alarm routine. The alarm routine can be selected from: at least one vibration signal from at least one vibration unit; vibration signals from at least two vibration units, wherein the respective vibration signals of each vibration unit differing from each other in at least one characteristic; sequence of vibration signals from at least one vibration unit; vibration sequences of vibration signals from at least two vibration units, wherein the respective vibration sequences differing from each other in at least one characteristic.

If more than two vibration units 4 are provided, it is conceivable that respective vibration units 4 can be activated serially or different vibration signals are provided at different times or only partially overlapping these signals at the same time. In this way, not only different vibration sequences can be triggered, but also locally different courses, so that a user's attention can be attracted even better or in a different way.

In parallel the analog or digital voice signal is sent from the representative device 16 to a transmission system 18 and further to a public or passenger address system 19. Generally speaking, a speech signal (or generally speech), which is transmitted through the transmission system 18 to the public system 19, is sampled with the help of the representative device 16 or through its components, for example a microphone unit.

The sampled speech (the speech signal) is analyzed in parallel, to transmission to the public or passenger address system 19, by the control unit 2, which can also be viewed as an analyzing system, according to the needs of speech intelligibility (e.g. by SIP = speech intelligibility prediction algorithm), checking thereby different parameters influencing the speech intelligibility.

Depending on the results of the above-mentioned analysis, the vibration unit 4 (for example in the form of a vibration motor or a taptic engine or the like) will be attenuated. The vibration signal of the vibration unit 4 is reciprocal to the speech intelligibility of the speaker. The lower the speech intelligibility the more vibration (vibration signals or strength of the vibration signal or the like) will be provided.

In further embodiments of the inventions presented, not shown in more detail, the at least one alarm routine for the user can be provided by a third technical device coupled to the second technical device and the third technical device can be selected from: electrical device designed to cause vibration signals; electrical device with at least one motor device designed to cause vibration signals.

In other words, it is conceivable that a standard headset could be retrofitted with such a third technical device, so that an executable system or equipment can also be created afterwards in order to use the method (M) presented.

In the possible functional sketch of FIG. 6, the processed signals are output in the form of a voice announcement via a loudspeaker unit L. However, in embodiments not shown in detail, communication between a handset and a headset or any communication between two corresponding technical devices is also conceivable, in which case the method according to the invention is then used. In this respect, the signals would then be output by the corresponding technical device.

In embodiments not shown in detail, the passenger address system 19 could then be dispensed with. It is also conceivable that in some exemplary embodiments the transmission system 18 is at least partially included in the respective technical device.

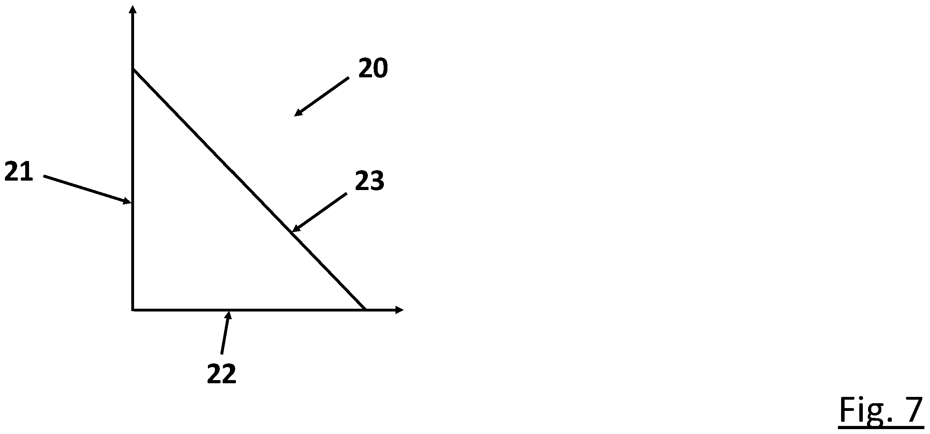

Fig. 7 shows a coordinate system 20 of a speech intelligibility and a vibration signal in relation to the method (M) presented. The speech intelligibility is plotted on the Y-axis 21 and an expression or a characteristic of the vibration signal is plotted on the X-axis 22. Such a characteristic can be, for example, a strength or a length of a vibration signal or a component of a vibration sequence.

As mentioned above in the explanations to Figure 6, the vibration signal or the characteristic of the vibration signal, which can be provided by a vibration unit 4, is reciprocal to the speech intelligibility of the speaker. The lower the speech intelligibility the more vibration (vibration signals or strength of the vibration signal or the like) will be provided. This fact is illustrated by the plotted line 23 in the coordinate system 20.

According to this coordinate system 20, values for the vibration acceleration below 0.5 m/s² are also conceivable. In other words, vibration signals with vibration acceleration values between 0.1 m/s² and 0.5 m/s² are also conceivable, which arise, for example, in the sense of providing the vibration signal.

These values can also be understood, for example, in the form of a preliminary stage for the actual alarm routines and can therefore be provided by the respective technical devices in general or in the form of a standby mode.

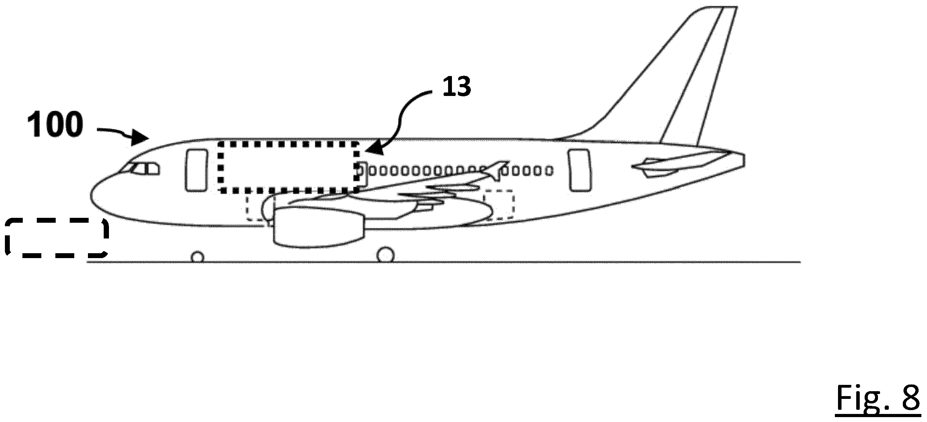

Fig. 8 shows an airplane 100 equipped with the system 13 of Fig.5. The dashed borders make it clear that the system 13 with its corresponding components can be provided both inside and outside the airplane 100.

### LIST OF REFERENCE SIGNS

- 1: handset for airplanes
- 2: control unit
- 3: control program
- 4: vibration unit
- 5: housing
- 6: hand microphone device
- 7: casing
- 8: headset device
- 9: bracket
- 10: earpad device
- 11: earpad device
- 12: microphone arrangement
- 13: system for communication routines in and around airplanes
- 14: base unit
- 15: external system unit
- 16: representative device
- 17: housing unit
- 18: transmission system
- 19: public or passenger address system
- 20: coordinate system
- 21: Y-axis
- 22: X-axis
- 23: line
- L: loudspeaker unit
- 100: airplane

## Claims

1. Method (M) for informing about speech intelligibility qualities comprising: receiving (M1) of speech information data exchanged between a first technical device and a second technical device that is currently used by a user; analyzing (M2) a speech intelligibility of the speech information data using a control unit (2) with a control program (3); providing (M3) at least one alarm routine for the user depending on the analysis result of the speech intelligibility of the speech information data.

2. Method (M) according to claim 1, wherein at least one quality feature of the analysis result in relation to the speech intelligibility of the speech information data triggers at least one characteristic of the alarm routine.

3. Method (M) according to one of the claims 1 to 2, wherein at least two consecutive and analyzed speech information data trigger at least one characteristic of the alarm routine.

4. Method (M) according to one of the claims 1 to 3, wherein the alarm routine is selected from: at least one vibration signal from at least one vibration unit (4); vibration signals from at least two vibration units (4), wherein the respective vibration signals of each vibration unit (4) differing from each other in at least one characteristic; sequence of vibration signals from at least one vibration unit (4); vibration sequences of vibration signals from at least two vibration units (4), wherein the respective vibration sequences differing from each other in at least one characteristic.

5. Method (M) according to claim 4, wherein the vibration signal is selected from: vibration signal with a vibration acceleration between 0,5 m/s² and 2,5 m/s², preferably between 0,75 m/s² and 2 m/s², more preferably between 1 m/s² and 1,5 m/s², more preferably between 1,5 m/s² and 1,75 m/s².

6. Method (M) according to one of the claims 4 to 5, wherein the vibration sequence is selected from: continuously increasing in relation to a vibration strength of the vibration signal; continuously increasing in relation to a vibration strength of the vibration signal with pauses with a time interval between 0,1 and 5 seconds, preferably between 0,5 and 3 seconds, more preferably between 1 and 2 seconds, even more preferably of approximately 1 second; constant vibration strength of the vibration signal; constant vibration strength of the vibration signal with pauses with a time interval between 0,1 and 5 seconds, preferably between 0,5 and 3 seconds, more preferably between 1 and 2 seconds, even more preferably of approximately 1 second.

7. Method (M) according to one of the claims 1 to 6, wherein the control unit (2) with the control program (3) is an integral part of the second technical device.

8. Method (M) according to one of the claims 1 to 7, wherein the control unit (2) with the control program (3) is at least partially an integral part of the second technical device and partially an integral part of an external system which is coupled to the second technical device or wherein the control unit (2) with the control program (3) is an integral part of an external system which is coupled to the second technical device.

9. Method (M) according to one of the claims 4 to 8, wherein the at least one alarm routine for the user is provided by a third technical device coupled to the second technical device and the third technical device is selected from: electrical device designed to cause vibration signals; electrical device with at least one motor device designed to cause vibration signals.

10. Method (M) according to one of the claims 4 to 8, wherein the vibration unit (4) is an integral part of the second technical device and selected from: electrical device designed to cause vibration signals; electrical device with at least one motor device designed to cause vibration signals.

11. Headset device (8) designed to carry out a method (M) according to one of the claims 1 to 10 when speech information data is sent or received.

12. Hand microphone device (6) designed to carry out a method (M) according to one of the claims 1 to 10 when speech information data is sent or received.

13. Handset for airplanes (1) designed to carry out a method (M) according to one of the claims 1 to 10 when speech information data is sent or received.

14. System (13) for communication routines in and around airplanes comprising at least one technical unit designed to carry out a method (M) according to one of the claims 1 to 10 when speech information data is sent or received.

15. Airplane (100) comprising a system (13) according to claim 14.
